# EUROPEAN PATENT APPLICATION

(11) **EP 4 631 580 A1**
(43) Date of publication of application: **15.10.2025**
(21) Application number: 25159068.3
(22) Date of filing: 20.02.2025
(51) Int. Cl.: A62C 3/16, H01M 50/30, H01M 50/383

(54) **BATTERY PACK FIRE EXTINGUISHER**

(30) Priority: 09.04.2024 KR 20240048172
(71) Applicant: SAMSUNG SDI CO., LTD., Yongin-si, Gyeonggi-do 17084 (KR)
(72) Inventor: KIM, Giyoung, 17084 Yongin-si (KR)
(74) Representative: Marks & Clerk LLP

(57) **Abstract**

A battery pack fire extinguisher includes: a plurality of battery cells; a bottom case accommodating the plurality of battery cells; a top case covering the plurality of battery cells and coupled to the bottom case; a fire extinguishing agent between an inner surface of the top case and one end of a first one of the plurality of battery cells; and a partition wall on an outside of the fire extinguishing agent and protruding beyond the fire extinguishing agent toward the first one of the plurality of battery cells.

## Description

### BACKGROUND

### 1. Field

Aspects of embodiments of the present disclosure relate to a battery pack fire extinguisher.

### 2. Description of the Related Art

A battery pack includes a number of battery cells depending on the intended application. For example, a battery pack for a household robot vacuum cleaner may include about 7 to about 14 battery cells, a battery pack for an e-bike may include about 20 battery cells, a battery pack for an e-scooter may include about 80 battery cells, and a battery pack for a light electric vehicle (LEV) may include about 200 battery cells.

An amount and position of a fire extinguishing agent used in the battery pack may vary depending on the intended use or application of the battery pack. The amount of the fire extinguishing agent used may vary depending on the capacity of the individual battery cells or the space (e.g., the volume) of the battery pack, but generally, one fire extinguishing agent applied to about 25 battery cells (e.g., for a 120 mm*120 mm space) may extinguish a fire of the battery cell.

If a plurality of fire extinguishing agents in the battery pack concurrently (or simultaneously) operate, the flame of the battery cell may spread due to the heat generated by ignition of the plurality of fire extinguishing agents in the battery pack.

In addition, if all of the fire extinguishing agents are activated by the flame of the battery cell, there will be no fire extinguishing agent left to operate if another flame occurs in another battery cell at a later time, making it impossible to extinguish flames that occur later.

### SUMMARY

An embodiment of the present disclosure provides a battery pack fire extinguisher that may prevent fire by blocking flames from spreading to surrounding battery cells when a fire occurs in one battery cell.

An embodiment of the present disclosure provides a battery pack fire extinguisher that, when a fire occurs in a battery cell, may extinguish the fire by using a fire extinguishing agent for a unit group of battery cells and may prevent a fire extinguishing agent outside the unit group from operating.

A battery pack fire extinguisher, according to an embodiment of the present disclosure, includes: a plurality of battery cells; a bottom case accommodating the plurality of battery cells; a top case covering the plurality of battery cells and coupled to the bottom case; a fire extinguishing agent between an inner surface of the top case and one end of a first one of the battery cells; and a partition wall on an outside of the fire extinguishing agent and protruding beyond, or with a height higher than, the fire extinguishing agent toward the first one of the battery cells.

The partition wall may be configured to limit an inflow range of a flame to the fire extinguishing agent, and the inflow range may exclude a flame generated from ones of the battery cells outside a unit group from among the plurality of battery cells and may introduce a flame generated from ones of the battery cells within the unit group.

The partition wall may be a top case rib configured to block a flame.

The partition wall may be made of, or may include, plastic resin, stainless steel, or aluminum.

The fire extinguishing agent may be a circular plate, and the partition wall may be a circular tube corresponding to the outside of the fire extinguishing agent.

The fire extinguishing agent may have a through hole in a portion corresponding to the first one of the battery cells.

The fire extinguishing agent may be a quadrangular plate, and the partition wall may be a quadrangular tube corresponding to the outside of the fire extinguishing agent.

The fire extinguishing agent may be a hexagonal star-shaped plate, and the partition wall may be a hexagonal star-shaped tube corresponding to the outside of the fire extinguishing agent.

The extinguishing agent may be a cross-shaped plate, and the partition wall may be a cross-shaped tube corresponding to the outside of the fire extinguishing agent.

The fire extinguishing agent may be a triangular plate, and the partition wall may be a triangular tube corresponding to the outside of the fire extinguishing agent.

The fire extinguishing agent may have a thickness, and a height of the partition wall may be greater than the thickness of the fire extinguishing agent.

The outside of the fire extinguishing agent may have a side surface that intersects perpendicularly to the inner surface of the top case, and the partition wall may be inclined at an angle (e.g. a set angle) with respect to the side surface and may have an inclined surface having a minimum width at a top and a maximum width at a bottom with respect to a center line of the fire extinguishing agent.

When the partition wall is divided into two based on the center line of the fire extinguishing agent, it may be formed to have a structure that surrounds both sides of the outside of the fire extinguishing agent or a structure that surrounds one side of the outside of the fire extinguishing agent.

The partition wall may surround at least one side of the outside of the fire extinguishing agent when viewed in a cross-sectional view.

An upper end of the partition wall and the outside of the fire extinguishing agent may have a gap therebetween.

The outside of the fire extinguishing agent may have a side surface that intersects perpendicularly to the inner surface of the top case, and the partition wall may be inclined at an angle (e.g. a set angle) with respect to the side surface and have an inclined surface having a maximum width at a top and a minimum width at a bottom with respect to a center line of the fire extinguishing agent.

The outside of the fire extinguishing agent may have a side surface that intersects perpendicularly to the inner surface of the top case, the partition wall may have a vertical surface corresponding to the outside of the side surface and a convex curved surface extending from the vertical surface and convex outward, and the convex curved surface may have a minimum width at a top and a maximum width at a bottom with respect to a center line of the fire extinguishing agent.

The convex curved surface, when divided into two based on the center line of the fire extinguishing agent, may be formed to have a structure that convexly surrounds both sides of the outside from below the fire extinguishing agent or a structure that convexly surrounds one side of the outside from below the fire extinguishing agent.

The convex curved surface may convexly surround at least one side of the outside from below the fire extinguishing agent when viewed in a cross-sectional view.

The outside of the fire extinguishing agent may have a side surface that intersects perpendicularly to the inner surface of the top case, the partition wall may have a vertical surface corresponding to the outside of the side surface and a concave curved surface extending from the vertical surface and concave outward, and the concave curved surface may have a maximum width at a top and a minimum width at a bottom with respect to a center line of the fire extinguishing agent.

When the concave curved surface is divided into two based on the center line of the fire extinguishing agent, it may be formed to have a structure that concavely surrounds both sides of the outside from below the fire extinguishing agent or a structure that concavely surrounds one side of the outside from below the fire extinguishing agent.

The concave curved surface may concavely surround at least one side of the outside from below the fire extinguishing agent when viewed in a cross-sectional view.

According to embodiments of the present disclosure, a fire extinguishing agent is installed between the inner surface of the top case and the battery cell so that a flame from a battery cell is guided to the fire extinguishing agent to ignite the fire extinguishing agent, and the smoke generated by the fire extinguishing agent, that is, an aerosol spray material, is induced into (or is directed into) the battery cell to extinguish the fire.

According to embodiments of the present disclosure, because the fire extinguishing agent is surrounded, along its periphery, by a partition, an inflow range of a flame into the fire extinguishing agent may be limited. For example, a flame generated from a battery cell in a corresponding unit group is introduced to the fire extinguishing agent while a flame generated from a battery cell outside the unit group from among the plurality of battery cells is not.

According to an embodiment, since the fire extinguishing agent is provided with a partition, the inflow range of the flame into the fire extinguishing agent may be limited by the partition. That is, flames generated from battery cells in the unit group are introduced, except for flames generated from battery cells outside the unit group among the plurality of battery cells.

Accordingly, when a fire occurs in a battery cell, the fire extinguishing agent in the corresponding unit group of battery cells may acts as an extinguishing agent, and the fire extinguishing agent(s) outside the unit group (e.g., corresponding to other unit groups) do(es) not (prematurely) operate (or ignite).

Thus, when an initial flame in a battery cell occurs, the corresponding fire extinguishing agent in the unit group acts as an extinguishing agent. In addition, when a subsequent fire occurs in another battery cell, the other extinguishing agent in the corresponding other unit group operates and extinguishes the subsequent fire.

Accordingly, in various embodiments, a partition is provided around the fire extinguishing agent to limit the inflow range of a flame so that even when a plurality of flames are generated in the battery cells in the battery pack at different times, the plurality of flames may be effectively extinguished.

At least some of the above and other features of the invention are set out in the claims.

### BRIEF DESCRIPTION OF THE DRAWINGS

FIG. 1 is a top plan view of a battery pack fire extinguisher according to an embodiment of the present disclosure.
FIG. 2 is a cross-sectional view taken along the line II-II in FIG. 1.
FIG. 3 is a cross-sectional view of the battery pack fire extinguisher shown in FIG. 1.
FIG. 4 is a top plan view of a battery pack fire extinguisher according to another embodiment of the present disclosure.
FIG. 5 is a top plan view of a fire extinguishing agent and a partition wall in FIG. 4.
FIG. 6 is a front view of FIG. 4.
FIG. 7A is a top plan view of a fire extinguishing agent and a cell partition wall applied to a battery pack fire extinguisher according to another embodiment of the present disclosure.
FIG. 7B is a perspective view of the battery pack fire extinguisher shown in FIG. 7A.
FIG. 8 is a top plan view of a fire extinguishing agent and a cell partition wall applied to a battery pack fire extinguisher according to another embodiment of the present disclosure.
FIG. 9 is a top plan view of a fire extinguishing agent and a cell partition wall applied to a battery pack fire extinguisher according to another embodiment of the present disclosure.
FIG. 10 is a top plan view of a fire extinguishing agent and a cell partition wall applied to a battery pack fire extinguisher according to another embodiment of the present disclosure.
FIG. 11 is a cross-sectional view of a fire extinguishing agent and a cell partition wall applied to a battery pack fire extinguisher according to another embodiment of the present disclosure.
FIG. 12 is a cross-sectional view of a fire extinguishing agent and a cell partition wall applied to a battery pack fire extinguisher according to another embodiment of the present disclosure.
FIG. 13 is a cross-sectional view of a fire extinguishing agent and a cell partition wall applied to a battery pack fire extinguisher according to another embodiment of the present disclosure.
FIG. 14 is a cross-sectional view of a fire extinguishing agent and a cell partition wall applied to a battery pack fire extinguisher according to another embodiment of the present disclosure.
FIG. 15 is a cross-sectional view of a fire extinguishing agent and a cell partition wall applied to a battery pack fire extinguisher according to another embodiment of the present disclosure.
FIG. 16 is a cross-sectional view of a fire extinguishing agent and a cell partition wall applied to a battery pack fire extinguisher according to another embodiment of the present disclosure.
FIG. 17 is a cross-sectional view of a fire extinguishing agent and a cell partition wall applied to a battery pack fire extinguisher according to another embodiment of the present disclosure.
FIG. 18 is a cross-sectional view of a fire extinguishing agent and a cell partition wall applied to a battery pack fire extinguisher according to another embodiment of the present disclosure.

### DETAILED DESCRIPTION

The present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

When a fire occurs in one battery cell of a battery pack including a plurality of battery cells, a fire extinguishing agent is used to extinguish the flame and prevent the fire from spreading to other battery cells in the battery pack. The fire extinguishing agent extinguishes flames caused by a fire in the battery pack. The fire extinguishing agent embedded into the battery pack extinguishes the flame in the shortest possible time and prevents the spread of fire.

A prismatic or circular battery cell may be used in the battery pack. To prevent chain ignition of battery cells, the battery pack includes a fire extinguishing agent. The fire extinguishing agent is installed in a structure in consideration of the operation characteristics at the upper portion (or upper end) of the battery cell, which is a source of fire.

The fire extinguishing agent is configured to be ignited and burned by the flame of the ignited battery cell to generate smoke, that is, an aerosol spray material, to extinguish the flame of the battery cell with the aerosol spray material.

The battery pack is configured so that when a first flame (or an initial flame) of a battery cell occurs, the fire extinguishing agent in the unit group acts as an extinguishing agent, and if a flame occurs in another battery cell at a time thereafter (e.g., at a time interval), the fire extinguishing agent in another unit group operates to extinguish the later fire.

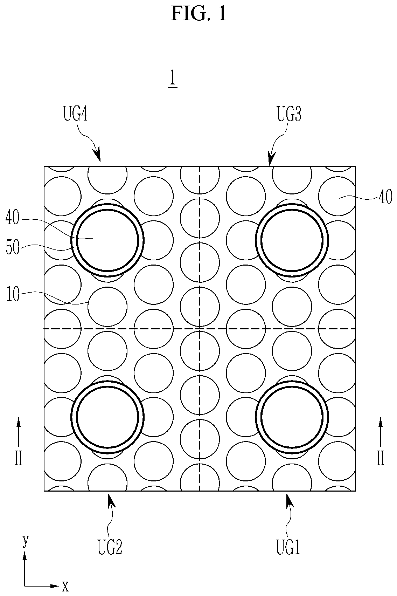

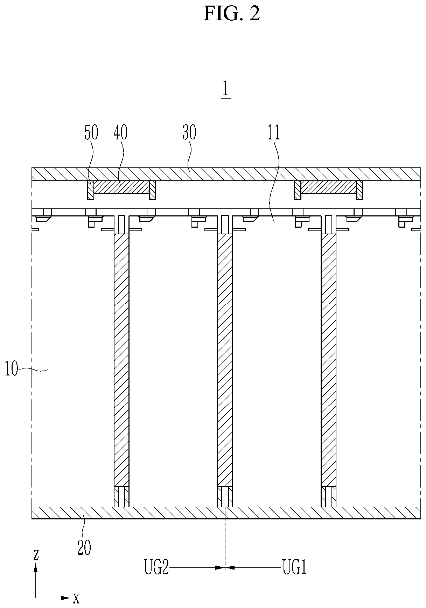

FIG. 1 is a top plan view of a battery pack fire extinguisher according to an embodiment of the present disclosure, and FIG. 2 is a cross-sectional view taken along the line II-II in FIG. 1.

Referring to FIG. 1 and FIG. 2, a battery pack fire extinguisher 1 according to an embodiment includes a plurality of battery cells 10, a bottom case 20 accommodating the battery cells 10, a top case 30 coupled to the bottom case 20, a fire extinguishing agent 40 provided between the top case 30 and the battery cells 10, and a partition wall 50 provided outside (e.g., extending around a periphery of) the fire extinguishing agent 40.

The battery cell 10 may be a prismatic rechargeable battery or cylindrical rechargeable battery. The bottom case 20 and the top case 30 may have various sizes depending on the capacity and size of the battery cells 10. The battery pack may be formed by connecting dozens to hundreds of battery cells 10 together in series, parallel, or a mixture of series and parallel. The temperature at which the fire extinguishing agent 40 ignites may be in a range of 380 °C to about 400 °C and, in one embodiment, may be about 390 °C.

The fire extinguishing agent 40 is configured to perform a more effective combustion operation at the initial stage of ignition of the battery cell 10. Accordingly, a vent 11 of the battery cell 10 is directed toward the top case 30 such that the fire extinguishing agent 40 is disposed between the vent 11 and the top case 30 to enable extinguishing action.

Depending on the structure of the battery pack, the fire extinguishing agent 40 may be installed corresponding to the vent 11 of the battery cell 10 or may be installed in a position away from (e.g., vertically and/or horizontally offset from) the vent 11. The battery cells 10 are disposed in unit groups UG, and the fire extinguishing agent 40 is disposed one by one in each unit group UG (e.g., one fire extinguishing agent 40 is disposed in each unit group UG). In the battery pack fire extinguisher 1 shown in FIG. 1, the battery cells 10 arranged in (e.g., form) first, second, third, and fourth unit groups UG1, UG2, UG3, and UG4.

The partition wall 50 is provided outside the fire extinguishing agent 40 and has a height (H) protruding from the fire extinguishing agent 40 toward the battery cell 10 (for example, downwardly). Accordingly, the partition wall 50 guides a flame generated from the battery cell 10 to the fire extinguishing agent 40 and guides the smoke generated by the ignition combustion of the fire extinguishing agent 40, that is, the aerosol spray material, toward the flame of the battery cell 10.

For example, the partition wall 50 limits the inflow range of the flame with the fire extinguishing agent 40. The inflow range is set (or configured) to introduce flames generated in the battery cells 10 in the unit group UG while excluding flames generated in the battery cells 10 outside the unit group UG from among the plurality of battery cells 10.

For example, the partition wall 50 may be formed as a rib of (e.g., extending from) the top case 30 configured to block a flame. The partition wall 50 may be formed of the same material as the top case 30, such as a plastic resin, thereby avoiding an increase in the number of components. In other embodiments, the partition wall 50 may be made of stainless steel or aluminum and may facilitate the ignition of the fire extinguishing agent 40 due to high heat conduction thereof.

In the illustrated embodiment, because the fire extinguishing agent 40 is formed as a circular plate, the partition wall 50 is formed as a circular tube corresponding to (e.g., extending around) the outside of the fire extinguishing agent 40. The partition wall 50 of the circular tube tightly accommodates the circular plate shape of the fire extinguishing agent 40, thereby enabling solid and stable installation of the fire extinguishing agent 40.

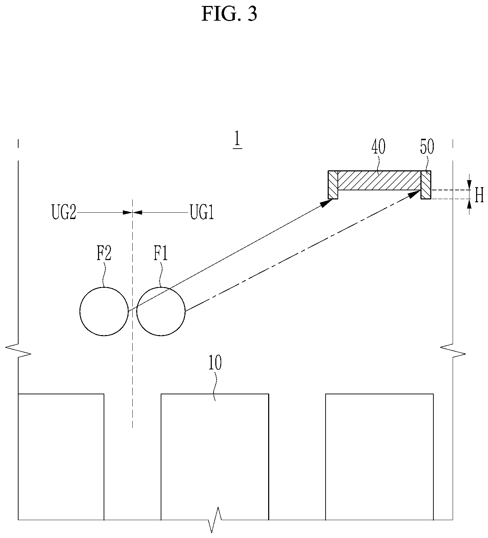

FIG. 3 is a cross-sectional view of the battery pack fire extinguisher shown in FIG. 1. Referring to FIG. 1 to FIG. 3, when a first flame (or an initial flame) F1 is generated in the battery cell 10 of the first unit group UG1, the flame (or a part thereof) is guided to the fire extinguishing agent 40 of the first unit group UG1 by the partition wall 50 to ignite the fire extinguishing agent 40 in the first unit group UG1.

In this situation, the generated first flame F1 is not guided to the fire extinguishing agent 40 of the adjacent second unit group UG2 by the partition wall 50 of that fire extinguishing agent 40. Accordingly, the fire extinguishing agent 40 of the second unit group UG2 does not ignite (e.g., maintains a state in which no ignition operation occurs).

In addition, the smoke generated by the ignition of the fire extinguishing agent 40 in the first unit group UG1, that is, the aerosol spray material, is guided to the battery cells 10 in the first unit group UG1 by the partition wall 50 to extinguish the first flame F1.

In this situation, the generated smoke, that is, the aerosol spray material, is not (or tends not to be) guided to the battery cells 10 in the adjacent second unit group UG2 by the partition wall 50. For example, the battery cells 10 of the second unit group UG2 are not affected by (or not substantively affected by) the smoke emitted by the fire extinguishing agent 40 of the first unit group UG1, that is, the air spray material.

Accordingly, when the first flame F1 occurs in the battery cell 10 in the first unit group UG1, the first flame F1 is guided to the fire extinguishing agent 40 in the first unit group UG1 due to the guiding action of the partition wall 50, and the fire extinguishing agent 40 extinguishes the flame F1 with the smoke generated by combustion ignition of the fire extinguishing agent 40.

In addition, when a second flame (or a subsequent flame) F2 occurs in a battery cell 10 in the second unit group UG2 at a later time, the second flame F2 (or a part thereof) is guided to the fire extinguishing agent 40 in the second unit group UG2 due to the guiding action of the partition wall 50, and the fire extinguishing agent 40 extinguishes the flame F2 with smoke generated by combustion ignition of the fire extinguishing agent 40 in the second unit group UG2.

As described above, the partition wall 50 surrounding the fire extinguishing agent 40 limits the inflow range of the first and second flames F1 and F2 so that first and second flames F1 and F2 may be efficiently extinguished even when the plurality of first and second flames F1 and F2 occur in the battery cell 10 at different times in the battery pack.

Hereinafter, various embodiments of the present disclosure will be described. The following embodiments will be primarily described in comparison with the above-described embodiment, and descriptions of the same or substantially similar components may be omitted or only briefly described while descriptions of different components will be primarily described.

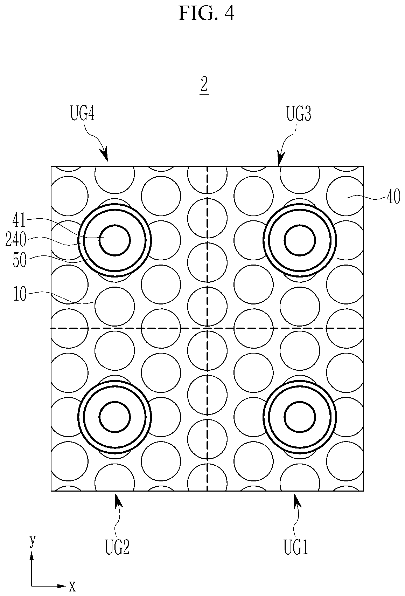

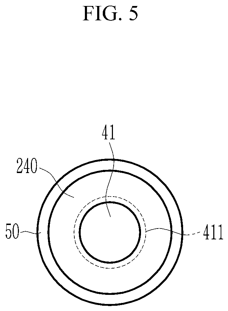

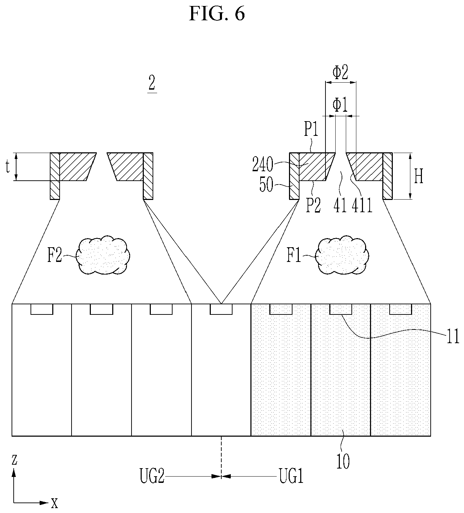

FIG. 4 is a top plan view of a battery pack fire extinguisher according to another embodiment of the present disclosure, FIG. 5 is a top plan view of a fire extinguishing agent and a partition wall shown in FIG. 4, and FIG. 6 is a front view of FIG. 4.

Referring to FIG. 4 to FIG. 6, in a battery pack fire extinguisher 2, according to an embodiment, one or each fire extinguishing agent 240 has a through hole (e.g., an opening) 41 in a portion thereof corresponding to one of the battery cells 10. This embodiment also includes the partition wall 50 described above.

The illustrated embodiment guides flame and smoke, that is, an aerosol spray material, to the partition wall 50, and has a further effect by virtue of the through hole 41.

The or each through hole 41 is disposed to correspond to the vent 11 of one of the battery cells 10, which cells discharge the first and second flames F1 and F2 generated in the battery cells. The first and second flames F1 and F2 may reach the top case 30 (see, e.g., FIG. 2) and each may form a hole (e.g., an opening) in the top case 30.

The through hole(s) 41 allow(s) the first and second flames F1 and F2 to pass therethrough, which reduces the reflection of the first and second flames F1 and F2 from the fire extinguishing agent(s) 40 around the through hole(s) 41, and heat generated during the ignition of the fire extinguishing agent(s) 40 may be minimized.

The through hole 41 in the fire extinguishing agent 40 corresponding to the vent 11 may be formed by removing a portion of the fire extinguishing agent 40. For example, because the extinguishing agent equivalent to the portion corresponding to the through hole 41 is removed, the amount of fire extinguishing agent 40 is reduced, and as a result, the heat generated when the fire extinguishing agent 40 ignites is reduced, that is, the heat of ignition, may be lowered.

In addition, to reduce or minimize the reflection of the first and second flames F1 and F2 and to lower the ignition heat of the fire extinguishing agent 40, the through hole(s) 41 may have an inclined surface. In more detail, the fire extinguishing agent 40 has a thickness t, and the through hole 41 has a first diameter Φ1 at a first surface (e.g., a top surface) P1 facing the top case 30 and has a second diameter Φ2 larger than the first diameter Φ1 at a second surface (e.g., a lower surface) P2 facing the battery cell 10. The second diameter Φ2 may be larger than the diameter of the vent 11 to effectively guide the first and second flames F1 and F2.

For example, the first diameter Φ 1 may be the same size as, that is, the same diameter as the vent 11 of the battery cell 10, and the second diameter Φ may be twice the size, that is, twice the diameter of the vent 11. The through hole 41 is connected to (e.g., is formed by or has) a conical surface 411 from the first diameter Φ1 to the second diameter Φ2.

Accordingly, the first and second flames F1 and F2 generated in the battery cell 10 cause minimal reflection by the second diameter Φ2 of the through hole(s) 41, and the second diameter Φ2 thereof allows the through hole(s) 41 to be relatively large, thereby reducing the amount of the fire extinguishing agent 40 to reduce or minimize the ignition heat.

In addition, because the through hole 41 narrows from the second diameter Φ2 to the first diameter Φ1, the first and second flames F1 and F2 are trapped within the conical surface 411 of the fire extinguishing agent 40, thus preventing them from returning to (e.g., being deflected toward) the battery cell 10.

For example, because the first and second flames F1 and F2 temporarily stay in the through hole(s) 41, the heat and time required to operate the fire extinguishing agent 40, for example, as a potassium solid compound, may be ensured. Accordingly, the fire extinguishing agent(s) 40 may be ignited more effectively by the first and second flames F1 and F2 staying in the through hole(s) 41.

When the battery cell 10 emits flames in the battery pack fire extinguisher 2 according to this embodiment, the first and second flames F1 and F2 proceed toward the fire extinguishing agent(s) 40 disposed above the vent 11 and proceed to the top case 30 through the through hole(s) 41.

The first and second flames F1 and F2 entering the through hole(s) 41 are temporarily trapped in the through hole(s) 41 by the conical surface 411 and stay there. Because the first and second flames F1 and F2 cannot return to (e.g., are not deflected toward) the battery cell 10, the temperature of the battery cell 10 is not increased.

The first and second flames F1 and F2 in the through hole(s) 41 ignite the fire extinguishing agent(s) 40 by supplying heat for sufficient time to ensure the operation of the fire extinguishing agent(s) 40. The smoke generated by the ignition of the fire extinguishing agent(s) 40, that is, the aerosol spray material, is supplied to the battery cell(s) 10 to extinguish the first and second flames F1 and F2.

In this situation, complete combustion of the fire extinguishing agent(s) 40 is induced by the first and second flames F1 and F2 staying in the through hole(s) 41. Sufficient combustion of the fire extinguishing agent 40 generates sufficient smoke, that is, an aerosol spray material, thereby further improving the fire extinguishing performance of the battery cell 10.

The partition wall 50 is provided outside each fire extinguishing agent 40 and has a height H protruding from the fire extinguishing agent 40 toward the battery cell 10. Accordingly, the partition wall 50 guides the respective one of the first and second flames F1 and F2 generated in the battery cell 10 to the fire extinguishing agent 40 and the through hole 41 and guides the smoke generated by the ignition combustion of the fire extinguishing agent 40, that is, the aerosol spray material, to the respective one of the first and second flames F1 and F2 of the battery cell 10.

For example, the partition wall 50 limits an inflow range of the respective one of the first and second flames F1 and F2 to the fire extinguishing agent 40. The inflow range is set to inflow the respective one of the first and second flames F1 and F2 generated in the battery cell 10 in the corresponding unit group UG and to separate the respective one of the first and second flames F1 and F2 generated in the battery cell 10 outside the corresponding unit group UG from among the plurality of battery cells 10.

That is, when the first flame F1 is generated in the battery cell 10 of the first unit group UG1, it is guided to the fire extinguishing agent 40 and the through hole 41 of the first unit group UG1 by the partition wall 50 to ignite the fire extinguishing agent 40 in the first unit group UG1.

In this case, the generated first flame F1 is not guided to the fire extinguishing agent 40 of the adjacent second unit group UG2 by the partition wall 50 and the through hole 41. Accordingly, the fire extinguishing agent 40 of the second unit group UG2 does not ignite.

In addition, the smoke generated by the ignition of the fire extinguishing agent 40 in the first unit group UG1, that is, the aerosol spray material, is guided to the battery cells 10 in the first unit group UG1 by the partition wall 50 and the through hole 41 to extinguish the first flame F1.

In this case, the generated smoke, that is, the aerosol spray material, is not guided to the battery cells 10 in the adjacent second unit group UG2 by the partition wall 50 and the through hole 41. In other words, the battery cells 10 of the second unit group UG2 are not affected by the smoke emitted by the fire extinguishing agent 40 of the first unit group UG1, that is, the air spray material.

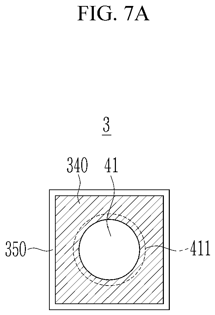

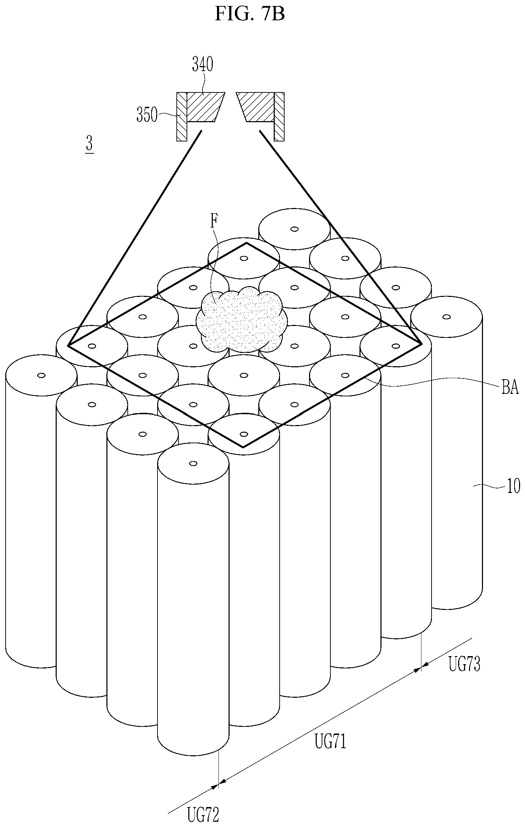

FIG. 7A is a top plan view of a fire extinguishing agent and a cell partition wall applied to a battery pack fire extinguisher according to another embodiment of the present disclosure, and FIG. 7B is a perspective view of a battery pack fire extinguisher shown in FIG. 7A.

Referring to FIG. 7A and FIG. 7B, a battery pack fire extinguisher 3 according to another embodiment, includes a fire extinguishing agent 340 as a quadrangular plate and a partition wall 350 as a quadrangular tube corresponding to the outside of the fire extinguishing agent 340.

The fire extinguishing agent 340 and the partition wall 350 correspond to a shape of the arrangement BA of the battery cells 10. The quadrangular tube partition wall 350 tightly accommodates the quadrangular plate fire extinguishing agent 340, thereby enabling solid and stable installation of the fire extinguishing agent 340.

For example, when the arrangement BA of the circular battery cells 10 is quadrangular, the quadrangular plate fire extinguishing agent 340 ensures a constant or substantial constant (i.e. more consistent) distance from the battery cells 10 in the quadrangular arrangement, and the quadrangular tube partition wall 350 corresponds to the fire extinguishing agent 340 and the battery cells 10 of the unit group UG71 corresponding to the fire extinguishing agent 340.

Accordingly, the fire extinguishing agent 340 extinguishes a first flame F generated in the battery cells 10 in the unit group UG71. However, the fire extinguishing agent 340 does not extinguish a second flame F generated from the battery cells 10 of adjacent unit groups UG72 and UG73.

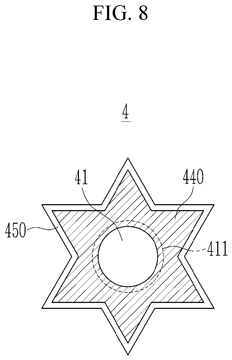

FIG. 8 is a top plan view of a fire extinguishing agent and a cell partition wall applied to a battery pack fire extinguisher according to another embodiment of the present disclosure. Referring to FIG. 8, a battery pack fire extinguisher 4, according to another embodiment, includes a fire extinguishing agent 440 formed as a hexagonal star-shaped plate and a partition wall 450 formed as a hexagonal star-shaped tube corresponding to the outside of the fire extinguishing agent 440.

The fire extinguishing agent 440 and the partition wall 450 correspond to a shape of the arrangement of the battery cells 10. The hexagonal star-shaped tube partition wall 450 tightly accommodates the hexagonal star-shaped plate fire extinguishing agent 440, thereby enabling solid and stable installation of the fire extinguishing agent 440.

For example, when the arrangement of the circular battery cells 10 is hexagonal star-shaped, the hexagonal star-shaped plate fire extinguishing agent 440 ensure a constant or substantially constant (i.e. more consistent) distance from the battery cells 10 in the hexagonal star-shaped arrangement, and the hexagonal star-shaped tube partition wall 450 corresponds to the fire extinguishing agent 440 and the battery cells 10 in the corresponding area.

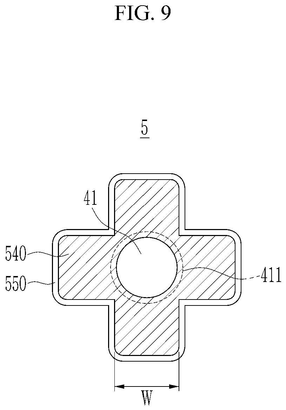

FIG. 9 is a top plan view of a fire extinguishing agent and a cell partition wall applied to a battery pack fire extinguisher according to another embodiment of the present disclosure. Referring to FIG. 9, a battery pack fire extinguisher 5, according to another embodiment, includes a fire extinguishing agent 540 formed as a cross-shaped plate having a width W and a partition wall 550 formed as a cross-shaped tube corresponding to the outside of the fire extinguishing agent 540.

The fire extinguishing agent 540 and the partition wall 550 correspond to a shape of the arrangement of the battery cells 10. The cross-shaped tube partition wall 550 tightly accommodates the cross-shaped plate fire extinguishing agent 540, thereby enabling solid and stable installation of the fire extinguishing agent 540.

For example, when the arrangement of the circular battery cells 10 is cross-shaped, the cross-shaped plate fire extinguishing agent 540 ensures a constant or substantially constant (i.e. more consistent) distance from the battery cells 10 in the cross-shaped arrangement, and the cross-shaped tube partition wall 550 corresponds to the fire extinguishing agent 540 and the battery cells 10 in the corresponding area.

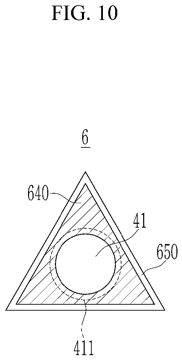

FIG. 10 is a top plan view of a fire extinguishing agent and a cell partition wall applied to a battery pack fire extinguisher according to another embodiment of the present disclosure. Referring to FIG. 10, a battery pack fire extinguisher 6, according to another embodiment, includes a fire extinguishing agent 640 formed as a triangular shape and a partition wall 650 formed as a triangular tube corresponding to the outside of the fire extinguishing agent 640.

The fire extinguishing agent 640 and the partition wall 650 correspond to a shape of the arrangement of the battery cells 10. The triangular tube partition wall 650 tightly accommodates the triangular plate fire extinguishing agent 640, thereby enabling solid and stable installation of the fire extinguishing agent 640.

For example, when the arrangement of the circular battery cells 10 is triangular, the triangular plate fire extinguishing agent 640 ensures a constant or substantially constant (i.e. more consistent) distance from the battery cells 10 of the triangular arrangement, and the triangular tube partition wall 650 corresponds to the fire extinguishing agent 640 and the battery cells 10 in the corresponding area.

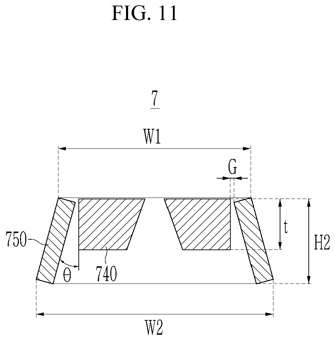

FIG. 11 is a cross-sectional view of a fire extinguishing agent and a cell partition wall applied to a battery pack fire extinguisher according to another embodiment of the present disclosure. Referring to FIG. 11, a battery pack fire extinguisher 7, according to another embodiment, includes a fire extinguishing agent 740 having a thickness t and a partition wall 750 having a total (e.g., an overall) height H2 that is greater than the thickness t (H2>t).

The outside of the fire extinguishing agent 740 has a side surface that intersects (or extends) perpendicularly with an inner surface of the top case 30 (see, e.g., FIG. 2). The partition wall 750 is inclined at an angle θ with respect to the side surface and has an inclined surface with a minimum width W1 at the top and a maximum width W2 at the bottom with respect to the center line of the fire extinguishing agent 740.

When the partition wall 750 is divided in half (e.g., is divided into two based on the center line of the fire extinguishing agent 740), the partition wall 750 may have a structure surrounding both sides or all of the outside of the fire extinguishing agent 740. The upper end of the partition wall 750 and the outside of the fire extinguishing agent 740 may have a gap G therebetween.

Accordingly, the partition wall 750 guides the flame generated from the battery cell 10 (see, e.g., FIG. 2) to the fire extinguishing agent 740 and guides the smoke generated by the ignition combustion of the fire extinguishing agent 740, that is, the aerosol spray material, to the flame of the battery cell 10.

The difference between the minimum width W1 and the maximum width W2 of the partition wall 750 may effectively guide the flame and effectively determine (or control) the spray of aerosol spray material. Because the gap G allows for some of the flame to proceed past the fire extinguishing agent 740, the flame may be prevented from being reflected from the partition wall 750 and the fire extinguishing agent 740 and flowing back into the battery cell 10.

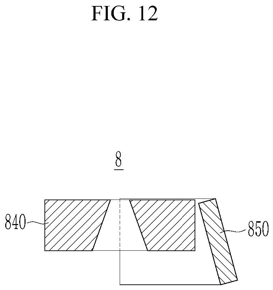

FIG. 12 is a cross-sectional view of a fire extinguishing agent and a cell partition wall applied to a battery pack fire extinguisher according to another embodiment of the present disclosure. Referring to FIG. 12, a battery pack fire extinguisher 8, according to another embodiment, includes a partition wall 850 having a structure surrounding one side of the outside of a fire extinguishing agent 840 when the partition wall 850 is divided in half (e.g., is divided into two based on the center line of the fire extinguishing agent 840).

Due to the outer wall of the top case 30 (see, e.g., FIG. 2), a partition wall may not need to be provided at (or adjacent to) a portion of the battery cell 10 where a flame is unlikely to occur. For example, the partition wall 850 is provided only on one side of the outside of the fire extinguishing agent 840. Accordingly, the partition wall 850 according to this embodiment may reduce the material required compared to the partition wall 750 of the previous above-described embodiment.

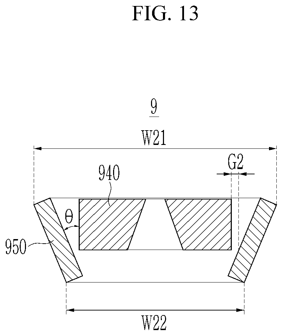

FIG. 13 is a cross-sectional view of a fire extinguishing agent and a cell partition wall applied to a battery pack fire extinguisher according to another embodiment of the present disclosure. Referring to FIG. 13, in a battery pack fire extinguisher 9, according to another embodiment, the outside of a fire extinguishing agent 940 forms a side surface that intersects (or extends) perpendicularly to an inner surface of the top case 30 (see, e.g., FIG. 2).

The partition wall 950 is inclined at an angle θ2 with respect to the side surface and has an inclined surface with a maximum width W21 at the top and a minimum width W22 at the bottom with respect to the center line of the fire extinguishing agent 940.

When the partition wall 950 is divided in half (e.g., is divided into two based on the center line of the fire extinguishing agent 940), it may have a structure surrounding both sides or all of the outer periphery of the fire extinguishing agent 940. The upper end of the partition wall 950 and the outer periphery of the fire extinguishing agent 940 may have a gap G2 therebetween.

Accordingly, the partition wall 950 according to this embodiment is somewhat lower (i.e. less effective) than the partition wall 750 of the previous above-described embodiment in terms of its performance of guiding the flame generated from the battery cell 10 (see, e.g., FIG. 2) to the fire extinguishing agent 940, but the partition wall 950 according to this embodiment may be better than the partition wall 750 of the previous above-described embodiment in terms of the performance of guiding the smoke generated by ignition combustion of the fire extinguishing agent 940, that is, aerosol spray material, to the flame of the battery cell 10.

In addition, the difference between the maximum width W21 and the minimum width W22 of the partition wall 950 may effectively prevent the fire extinguishing agent 940 from falling (e.g., from becoming detached and falling) toward the battery cell 10. Because the gap G2 allows for some of the flame to proceed, the flame may be prevented from being reflected from the partition wall 950 and the fire extinguishing agent 940 and flowing back into the battery cell 10.

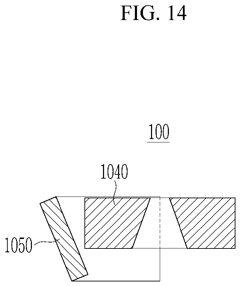

FIG. 14 is a cross-sectional view of a fire extinguishing agent and a cell partition wall applied to a battery pack fire extinguisher according to another embodiment of the present disclosure. Referring to FIG. 14, a battery pack fire extinguisher 100, according to another embodiment, includes a partition wall 1050 having a structure surrounding one side of the outside of a fire extinguishing agent 1040 when the partition wall 1050 is divided in half (e.g., is divided into two based on the center line of the fire extinguishing agent 1040).

Due to the outer wall of the top case 30 (see, e.g., FIG. 2), a partition wall may not need to be provided at a portion of the battery cell 10 where a flame is unlikely to occur. For example, the partition wall 1050 is provided only on one side of the outside of the fire extinguishing agent 1040. Accordingly, the partition wall 1050 according to this embodiment may reduce the material required compared to the partition wall 950 according to the previous above-described embodiment.

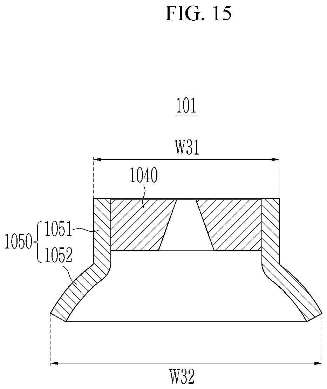

FIG. 15 is a cross-sectional view of a fire extinguishing agent and a cell partition wall applied to a battery pack fire extinguisher according to another embodiment of the present disclosure. Referring to FIG. 15, in a battery pack fire extinguisher 101, according to another embodiment, the outside of the fire extinguishing agent 1040 has a side surface that intersects (or extends) perpendicularly to an inner surface of the top case 30 (see, e.g., FIG. 2). The partition wall 1050 has a vertical surface 1051 corresponding to the outside of the side surface and a convex curved surface 1052 connected to (e.g., extending from) the vertical surface 1051 and convex outwardly (e.g., away from the fire extinguishing agent 1040).

The vertical surface 1051 may stably fix the fire extinguishing agent 1040. The convex curved surface 1052 guides the flame generated from the battery cell 10 (see, e.g., FIG. 2) to the fire extinguishing agent 1240 and guides the smoke generated by the ignition combustion of the fire extinguishing agent 1240, that is, the aerosol spray material, to the flame of the battery cell 10.

In addition, the convex curved surface 1052 has a minimum width W31 at the top and a maximum width W32 at the bottom with respect to the center line of the fire extinguishing agent 1040. When the convex curved surface 1052 is divided into two based on the center line of the fire extinguishing agent 1040, it may have a structure that convexly surrounds both sides of the outside from below the fire extinguishing agent 1040.

Accordingly, the difference between the minimum width W31 and the maximum width W32 of the convex curved surface 1052 may effectively guide the flame from the battery cell 10 to the fire extinguishing agent 1040 and effectively guide the spraying of the aerosol spray material from the fire extinguishing agent 1040 to the battery cell 10.

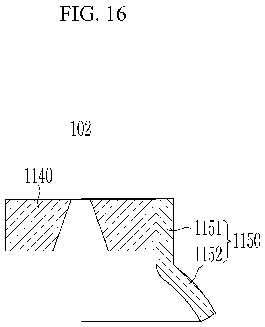

FIG. 16 is a cross-sectional view of a fire extinguishing agent and a cell partition wall applied to a battery pack fire extinguisher according to another embodiment of the present disclosure. Referring to FIG. 16, in a battery pack fire extinguisher 102, according to another embodiment, a partition wall 1150 may have a structure convexly surrounding one side of the outside from below a fire extinguishing agent 1140 when the partition wall 1150 is divided into two based on the center line of the fire extinguishing agent 1140.

Due to the outer wall of the top case 30 (see, e.g., FIG. 2), a partition wall may not need to be provided at a portion of the battery cell 10 where a flame is unlikely to occur. For example, the partition wall 1150 is provided only on one side of the outside of the fire extinguishing agent 1140. Accordingly, the partition wall 1150 according to this embodiment may reduce the material required compared to the partition wall 1050 according to the previous above-described embodiment.

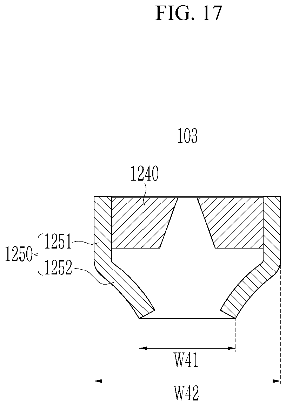

FIG. 17 is a cross-sectional view of a fire extinguishing agent and a cell partition wall applied to a battery pack fire extinguisher according to another embodiment of the present disclosure. Referring to FIG. 17, in a battery pack fire extinguisher 103, according to another embodiment, the outside of a fire extinguishing agent 1240 has a side surface that intersects (or extends) perpendicularly to an inner surface of the top case 30 (see, e.g., FIG. 2). The partition wall 1250 has a vertical surface 1251 corresponding to the outside of the side surface and a concave curved surface 1252 connected to the vertical surface 1251 and concave outward (e.g., toward the fire extinguishing agent 1240).

The vertical surface 1251 may stably fix the fire extinguishing agent 1240. The concave curved surface 1252 guides the flame generated from the battery cell 10 (see, e.g., FIG. 2) to the fire extinguishing agent 1240 and guides the smoke generated by the ignition combustion of the fire extinguishing agent 1240, that is, the aerosol spray material, to the flame of the battery cell 10.

Accordingly, the partition wall 1250 according to this embodiment is somewhat lower (i.e. less effective) than the partition wall 1050 according to the previous above-described embodiment in terms of the performance of guiding the flame generated from the battery cell 10 (see, e.g., FIG. 2) to the fire extinguishing agent 1240, but the partition wall 1250 according to this embodiment may be better than the partition wall 1050 according to the previous above-described embodiment in terms of the performance of guiding the smoke generated by ignition combustion of the fire extinguishing agent 1240, that is, aerosol spray material, to the flame of the battery cell 10.

In addition, the concave curved surface 1252 has a maximum width W42 at the top and a minimum width W41 at the bottom with respect to the center line of the fire extinguishing agent 1240. When the concave curved surface 1252 is divided into two based on the center line of the fire extinguishing agent 1240, it may have a structure that concavely surrounds both sides of the outside from below the fire extinguishing agent 1240.

Accordingly, the difference between the maximum width W42 and the minimum width W41 of the concave curved surface 1252 may effectively prevent the fire extinguishing agent 1240 from falling toward the battery cell 10.

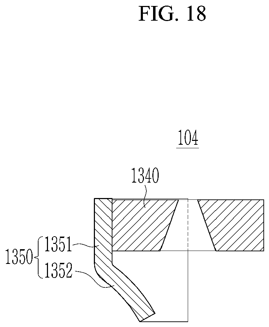

FIG. 18 is a cross-sectional view of a fire extinguishing agent and a cell partition wall applied to a battery pack fire extinguisher according to another embodiment of the present disclosure. Referring to FIG. 18, in a battery pack fire extinguisher 104, according to another embodiment, a partition wall 1350 may have a structure concavely surrounding one side of the outside from below a fire extinguishing agent 1340 when the partition wall 1350 is divided into two based on the center line of the fire extinguishing agent 1340.

Due to the outer wall of the top case 30 (see, e.g., FIG. 2), a partition wall may not need to be provided at a portion of the battery cell 10 where a flame is unlikely to occur. For example, the partition wall 1350 is provided only on one side of the outside of the fire extinguishing agent 1340. Accordingly, the partition wall 1350 according to this embodiment may reduce the material required compared to the partition wall 1250 according to the previous above-described embodiment.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims and their equivalents.

**Description of Some Reference Symbols**

| | | | |
|---|---|---|---|
| 1, 2, 3, 4, 5, 6, 7, 8, 9: | battery pack fire extinguisher | | |
| 10: | battery cell | 11: | vent |
| 20: | bottom case | 30: | top case |
| 40: | fire extinguishing agent | 41: | through hole |
| 100, 101, 102, 103, 104: | battery pack fire extinguisher | | |
| 50: | partition wall | 240: | fire extinguishing agent |
| 340: | fire extinguishing agent | 350: | partition wall |
| 411: | conical surface | 440: | fire extinguishing agent |
| 450: | partition wall | 540: | fire extinguishing agent |
| 550: | partition wall | 640: | fire extinguishing agent |
| 650: | partition wall | 740: | fire extinguishing agent |
| 750: | partition wall | 840: | fire extinguishing agent |
| 850: | partition wall | 940: | fire extinguishing agent |
| 950: | partition wall | 1040: | fire extinguishing agent |
| 1050: | partition wall | 1051: | vertical surface |
| 1052: | convex curved surface | 1140: | fire extinguishing agent |
| 1150: | partition wall | 1240: | fire extinguishing agent |
| 1250: | partition wall | 1251: | vertical surface |
| 1252: | concave curved surface | | |
| 1350: | partition wall | | |
| 1340: | fire extinguishing agent | F1: | first flame |
| F2: | second flame | G: | gap |
| G2: | gap | H: | height |
| P1: | first surface | P2: | second surface |
| t: | thickness | UG: | unit group |
| UG1, UG2, UG3, UG4: | first, second, third, fourth unit group | | |
| W: | width | W1: | minimum width |
| W2: | maximum width | W11: | maximum width |
| W21: | minimum width | W21: | maximum width |
| W22: | minimum width | W31: | minimum width |
| W32: | maximum width | W41: | minimum width |
| W42: | maximum width | θ: | angle |
| θ2: | angle | Φ1: | first diameter |
| Φ2: | second diameter | | |

## Claims

1. A battery pack fire extinguisher comprising:
a plurality of battery cells;
a bottom case accommodating the plurality of battery cells;
a top case covering the plurality of battery cells and coupled to the bottom case;
a fire extinguishing agent between an inner surface of the top case and one end of a first one of the plurality of battery cells; and
a partition wall on an outside of the fire extinguishing agent and protruding beyond, or with a height higher than, the fire extinguishing agent toward the first one of the plurality of battery cells.

2. The battery pack fire extinguisher of claim 1, wherein the partition wall is configured to limit an inflow range of a flame to the fire extinguishing agent, and
wherein the inflow range excludes a flame generated from ones of the battery cells outside a unit group from among the plurality of battery cells and introduces flames generated from ones of the battery cells within the unit group to the fire extinguishing agent.

3. The battery pack fire extinguisher of claim 1 or claim 2, wherein the partition wall is a top case rib that is configured to block a flame.

4. The battery pack fire extinguisher of any one of the preceding claims, wherein the partition wall comprises plastic resin, stainless steel, or aluminum.

5. The battery pack fire extinguisher of any one of the preceding claims, wherein the fire extinguishing agent is a circular plate, and
wherein the partition wall is a circular tube corresponding to the outside of the fire extinguishing agent.

6. The battery pack fire extinguisher of any one of claims 1 to 4, wherein the fire extinguishing agent is a quadrangular plate, and
wherein the partition wall is a quadrangular tube corresponding to the outside of the fire extinguishing agent.

7. The battery pack fire extinguisher of any one of claims 1 to 4, wherein the fire extinguishing agent is a hexagonal star-shaped plate, and
wherein the partition wall is a hexagonal star-shaped tube corresponding to the outside of the fire extinguishing agent.

8. The battery pack fire extinguisher of any one of claims 1 to 4, wherein the fire extinguishing agent is a cross-shaped plate, and
wherein the partition wall is a cross-shaped tube corresponding to the outside of the fire extinguishing agent.

9. The battery pack fire extinguisher of any one of claims 1 to 4, wherein the fire extinguishing agent is a triangular plate, and
wherein the partition wall is a triangular tube corresponding to an outside of the fire extinguishing agent.

10. The battery pack fire extinguisher of any one of the preceding claims, wherein the fire extinguishing agent has a through hole in a portion corresponding to the first one of the plurality of battery cells.

11. The battery pack fire extinguisher of any one of the preceding claims, wherein the fire extinguishing agent has a thickness, and
wherein a height of the partition wall is greater than the thickness of the fire extinguishing agent.

12. The battery pack fire extinguisher of claim 11, wherein the outside of the fire extinguishing agent has a side surface that intersects perpendicularly to the inner surface of the top case, and
wherein the partition wall is inclined at an angle with respect to the side surface and has an inclined surface having a minimum width at a top and a maximum width at a bottom with respect to a center line of the fire extinguishing agent, and optionally wherein, the partition wall surrounds at least one side of the outside of the fire extinguishing agent when viewed in a cross-sectional view, and optionally wherein an upper end of the partition wall and the outside of the fire extinguishing agent have a gap therebetween.

13. The battery pack fire extinguisher of claim 11, wherein the outside of the fire extinguishing agent has a side surface that intersects perpendicularly to the inner surface of the top case, and
wherein the partition wall is inclined at an angle with respect to the side surface and has an inclined surface having a maximum width at a top and a minimum width at a bottom with respect to a center line of the fire extinguishing agent.

14. The battery pack fire extinguisher of claim 11, wherein the outside of the fire extinguishing agent has a side surface that intersects perpendicularly to the inner surface of the top case,
wherein the partition wall has a vertical surface corresponding to the outside of the side surface and a convex curved surface extending from the vertical surface and convex outward, and
wherein the convex curved surface has a minimum width at a top and a maximum width at a bottom with respect to a center line of the fire extinguishing agent, and optionally wherein the convex curved surface convexly surrounds at least one side of the outside from below the fire extinguishing agent when viewed in a cross-sectional view.

15. The battery pack fire extinguisher of claim 11, wherein the outside of the fire extinguishing agent has a side surface that intersects perpendicularly to the inner surface of the top case,
wherein the partition wall has a vertical surface corresponding to the outside of the side surface and a concave curved surface extending from the vertical surface and concave outward, and
wherein the concave curved surface has a maximum width at a top and a minimum width at a bottom with respect to a center line of the fire extinguishing agent, and optionally wherein the concave curved surface concavely surrounds at least one side of the outside from below the fire extinguishing agent when viewed in a cross-sectional view.
